Europäisches Patentamt

European Patent Office

Office européen des brevets

(19)

(11) Veröffentlichungsnummer: **0 010 576 B1**

(12) **EUROPÄISCHE PATENTSCHRIFT**

(45) Veröffentlichungstag der Patentschrift:
19.10.83

(21) Anmeldenummer: 79102783.2

(22) Anmeldetag: 02.08.79

(51) Int. Cl.³: **H 01 B 3/30**, G 02 B 5/16,
H 01 B 7/28, H 02 G 15/10,
C 08 L 75/04, C 08 K 5/05

(54) **Füllmasse auf Polyurethan-Basis zur Längsabdichtung elektrischer oder optischer Nachrichtenkabel oder Kabelverbindungen und mit dieser Füllmasse versehene Verbindungsstücke und Kabel.**

(30) Priorität: 30.10.78 DE 2847383
30.10.78 DE 2847387

(43) Veröffentlichungstag der Anmeldung:
14.05.80 Patentblatt 80/10

(45) Bekanntmachung des Hinweises auf die Patenterteilung:
19.10.83 Patentblatt 83/42

(84) Benannte Vertragsstaaten:
AT BE DE FR GB IT LU NL SE

(56) Entgegenhaltungen:
DE-A-2 001 237
DE-A-2 429 670
DE-A-2 708 819
DE-A-2 728 642
DE-B-2 729 368
FR-A-2 331 599
GB-A-1 520 940
US-A-3 223 672
US-A-3 733 426
US-A-4 102 716

Die Akte enthält technische Angaben, die nach dem
Eingang der Anmeldung eingereicht wurden und die
nicht in dieser Patentschrift enthalten sind.

(73) Patentinhaber: SIEMENS AKTIENGESELLSCHAFT,
Berlin und München Wittelsbacherplatz 2,
D-8000 München 2 (DE)

(72) Erfinder: Nöthe, Björn, Dipl.-Chem.,
Abt-Williram-Strasse 25, D-8019 Ebersberg (DE)

Füllmasse auf Polyurethan-Basis zur Längsabdichtung elektrischer oder
optischer Nachrichtenkabel oder Kabelverbindungen und
mit dieser Füllmasse versehene Verbindungsstücke und Kabel

Die Erfindung liegt auf dem Gebiet der Längsabdichtung von elektrischen und optischen Nachrichtenkabeln oder Kabelverbindungen und behandelt die werkstofftechnische Weiterentwicklung einer entsprechenden Füllmasse.

Um bei elektrischen Kabeln, insbesondere bei Nachrichtenkabeln mit kunststoffisolierten Adern, im Schadensfalle die Längsausbreitung von Wasser oder Feuchtigkeit zu unterbinden, ist es bekannt, die Kabelseele mit einer wasserabweisenden oder wasseraufsaugenden, quellenden Substanz zu füllen. Neben zelluloseartigen Stoffen, die im Kontakt mit Wasser ihr Volumen um ein Vielfaches vergrößern, und neben aufschäumbaren Polyurethanen (DE-OS 23 61 207) kommen hierfür insbesondere vaselineartige Substanzen in Betracht. Vaselineartige Materialien können bei optischen Nachrichtenkabeln, deren Übertragungselemente Glasfaser enthalten, gleichzeitig dazu dienen, die Beweglichkeit der Übertragungselemente in der Kabelseele zu gewährleisten (DE-OS 2 302 662 = US-PS 4 072 398; DE-OS 2 429 670 = GB-PS 1 445 732).

Zum Austreiben von Wasser aus der Kabelseele eines nachrichtenkabels sowie zur Verhinderung weiterer Eindringens von Wasser ist eine Füllmasse bekannt, die aus einem Polyol, einem Isocyanat-Präpolymer, einem Gelierungsmittel und einem Katalysator besteht. Eine derartige ursprünglich flüssige Masse bildet sich über einen längeren Zeitraum zu einer weichen klebrigen Verbindung um, die die Isolierung der Kabeladern benetzt. Bei dieser Füllmasse handelt es sich dem Grunde nach um eine Lösung eines bei Raumtemperatur reagierenden flüssigen Urethanelastomers in einem niedrigviskosen Öl. Das Urethanelastomer wird dabei aus einem Polyol und einem Isocyanat-Präpolymer gebildet, wobei das Polyol in der Art dem Polyäther, Polyester oder Rizinusöl entspricht. Beim Einbringen der Masse sind das Polyol und das Isocyanat-Präpolymer in einem aromatischen Lösungsmittel gelöst, wobei als Katalysator für die Urethanbildung Dibutylzinndilaurat vorgesehen ist (DE-OS 22 59 411 = US-Pat. 3 733 426).

Bei der Längsabdichtung von Nachrichtenkabeln müssen gegebenenfalls besondere Randbedingungen berücksichtigt werden. Dies ist beispielsweise dann der Fall, wenn die Kabelseele während des Betriebes unter einem axialen Überdruck eines Gases steht. Hierbei muß verhindert werden, daß sich durch Migration einzelner Komponenten der Füllmasse in der Kabelseele in Längsrichtung verlaufende, ununterbrochene Gaskanäle bilden.

Ähnliche Anforderungen gelten für Kabelverbindungen (z. B. Kabelmuffen). Für das Verbinden zweier Kabel ist es erforderlich, die Aderbündel aufzuspießen und mit den Adern des anderen Kabelstückes zu verbinden. Die einzelnen so verbundenen Adern müssen gegeneinander wieder isoliert werden, so daß ein räumlich zum Teil wesentlich größeres Gebilde entsteht. Da die Isolation der einzelnen Adern geöffnet wurde, muß dieses Gebilde ebenfalls gegen das Eindringen von Feuchte oder Wasser geschützt werden.

Es ist auch bekannt, Kabelgarnituren mit Gießmasse zu füllen (GB-PS 1 157 435).

Aus der DE-A-2 001 237 sind Dichtungsmassen auf Polyurethanbasis bekannt, die aus einem Prepolymer aus üblichen Polyolen sowie Diisocyanaten und Fettalkoholen bestehen. Die Fettalkohole wirken als interne Weichmacher.

Aus der FR-A-2 331 559 ist eine für Kabel geeignete Füllmasse auf Polyurethanbasis bekannt, wobei eine Reaktion zwischen einem Polyol und einem Prepolymer stattfindet. Das Prepolymer enthält Gruppen von Diisocyanaten, wobei eine Reihe von Beispielen angegeben sind, bei denen jedoch kein Hinweis auf die Verwendung von Hexamethylen 1.6-Diisocyanat gegeben wird.

Der Erfindung liegt die Aufgabe zugrunde, zur Längsabdichtung von elektrischen oder optischen Kabeln bzw. Kabelverbindungen mit kunststoffisolierten Adern eine Füllmasse zu schaffen, die auch über längere Zeiträume die Längsdichtigkeit des Kabels gewährleistet.

Erfindungsgegenstand ist eine Füllmasse auf Polyurethan-Basis zur Längsabdichtung von elektrischen oder optischen Kabeln, bestehend aus einem Polyester-Polyäther-Polyol oder einem Polyester-Polyol und einem Diisocyanat im Gemisch mit Dibutylzinndilaurat als Katalysator und mit einem niederviskosen, verzweigten, langkettigen, aliphatischen monofunktionellen Alkohol als Weichmacher, welche dadurch gekennzeichnet ist, daß als Diisocyanat Hexamethylen-1.6-Diisocyanat verwendet ist.

Eine erste Weiterbildung der Erfindung betrifft ein Verbindungsstück für Kabel, die für die Übertragung von Informationen, insbesondere für die Nachrichtentechnik dienen und aus einer Vielzahl von elektrisch leitenden Adern bestehen, die gebündelt sind und mehrere solcher Bündel in einer äußeren Schutzumhüllung enthalten und die an ihren Enden mit anderen Kabeln der gleichen Art verbunden sind, wobei diese Verbindung in einer Kabelmuffe untergebracht ist, die aus ausgehärtetem, mechanisch stabilem Kunststoffmaterial besteht oder dieses enthält und die zum Zwecke der Isolation und zum Schutze gegen Feuchte (Wasser) mit Kunststoffmaterial gefüllt ist. Dieses Verbindungsstück ist dadurch gekennzeichnet, daß die Kabelmuffe mit einer Füllmasse nach Anspruch 1 gefüllt ist.

Eine zweite Weiterbildung der Erfindung betrifft ein Kabel, insbesondere für die Übertragung von Informationen, mit einer äußeren Schutzhülle, in deren Innerem eine Füllmasse vorgesehen ist, welches dadurch gekennzeichnet ist, daß eine Füllmasse nach Anspruch 1 verwendet wird.

Bei einer derartigen Füllmasse führt die Mitverwendung des monofunktionellen Alkohols während der Polyurethanbildung zu einem Kettenabbruch und zur Bildung von endständigen, aliphatischen, im Molekülnetzwerk verankerten Gruppen. Dieser Molekülaufbau gewährleistet dabei sowohl eine hohe Elastizität als auch eine permanente Klebrigkeit des vernetzten Materials, ohne daß die Gefahr besteht, daß durch Migrationseffekte über längere Zeiträume eine Veränderung der Füllmasse erfolgt.

Ausführungsbeispiele einer gemäß der Erfindung ausgebildeten Füllmasse sind nachfolgend dargestellt.

## Beispiel I

| Komponente A: | 460 g | eines Polyäther-Polyester-Polyols mit einem Äquivalentgewicht von 340 g, einer Viskosität von ca. 2500 mPa · sec bei 25°C und einer Dichte von 0,95 g/ml bei 20°C |
| Komponente B: | 177 g | 2-Octyldodecanol |
| Komponente C: | 160 g | Hexamethylen-1.6-Diisocyanat |
| Komponente D: | 0,2 g | Dibutylzinndilaurat |

## Beispiel II

| Komponente A: | 460 g | entwässertes Rizinusöl |
| Komponente B: | 177 g | 2-Octyldodecanol |
| Komponente C: | 160 g | Hexamethylen-1.6-Diisocyanat |
| Komponente D: | 0,2 g | Dibutylzinndilaurat |

## Beispiel III

| Komponente A: | 414 g | der Komponente A aus Beispiel I |
| Komponente B: | 217 g | der Komponente B aus Beispiel I |
| Komponente C: | wie in Beispiel I | |
| Komponente D: | 0,3 g | der Komponente D in Beispiel I |

## Beispiel IV

| Komponente A: | 483 g | der Komponente A aus Beispiel I |
| Komponente B: | 157 g | der Komponente B aus Beispiel I |
| Komponente C: | wie in Beispiel I | |
| Komponente D: | wie in Beispiel I | |

Anstelle des als Komponente B vorgesehenen Alkohols kommen auch andere verzweigte Fettalkohole in Betracht.

An Kunststoffmaterialien, die zum feuchtedichten Verschluß (hermetische Abdichtung) von Kabeln oder Kabelgarnituren dienen, sind eine Reihe von Anforderungen zu stellen. Im Einzelnen handelt es sich um folgende Anforderungen:

1. Die Viskosität bei der Verarbeitung sollte möglichst gering sein, damit das Kunststoffmaterial auch bei niedrigen Temperaturen zwischen die Aderbündel und zwischen die miteinander verbundenen Adern leicht eindringen kann.
2. Die Selbstaushärtung des Materials sollte möglichst schnell erfolgen, das heißt die sogenannte Topfzeit soll in dem angegebenen Temperaturbereich für die Verarbeitung wenigstens 5 Minuten sein.
3. Das Kunststoffmaterial muß ein gutes Selbstaushärtevermögen bei von −10 bis +50°C reichenden Verarbeitungstemperaturen haben, damit das Verlegen von Kabeln möglichst über das ganze Jahr hinweg durchgeführt werden kann.
4. Die Elastizität des ausgehärteten Kunststoffmaterials soll hoch sein, damit Wärmeausdehnungen der Metallteile ausgeglichen werden können.
5. Das Klebevermögen der Masse, das heißt die Eigenschaft, an dem Material der Kabelmuffe, an dem Isoliermaterial der einzelnen Adern und an dem Isoliermaterial der miteinander verbundenen Adern fest zu haften, muß gut sein.

6. Hohe Feuchtedichtigkeit und Wasserundurchlässigkeit sind hier selbstverständliche Voraussetzungen.

7. Das ausgehärtete Kunststoffmaterial sollte möglichst hoch kerbanfällig sein, damit die Kunststoffüllung beim Öffnen einer solchen Kabelverbindung, die beispielsweise aus zwei zusammengesetzten Schalenhälften besteht, in einfacher Weise entfernt werden kann. Das bedeutet im Falle der Kabelverbindungen, daß die Füll- und Dichtmasse möglichst durch Einwirkung von Hand entfernt werden kann. Die Anwendung von Werkzeugen (Meißel, Schraubenzieher und ähnliches) ist tunlichst zu vermeiden, um die Adern nicht zu beschädigen.

8. Das Haftvermögen des Kunststoffmaterials sollte für eine Betriebszeit von etwa 30 Jahren bleibend sein.

9. Es ist wichtig, daß das Kunststoffmaterial im ausgehärteten Zustand einen hohen Isolationswiderstand aufweist, der möglichst mehr als $10^{11}\,\Omega$ cm bei Beanspruchung mit mindestens 1 kV/mm beträgt. Die Forderung nach hohen Isolationswiderstand gilt auch nach Lagerung des Materials in Wasser und verschiedenen Chemikalien. Es sei erwähnt, daß die Dielektrizitätskonstante und der Verlustwinkel möglichst klein sein sollen.

10. Die chemische Widerstandsfähigkeit soll so sein, daß bei mindestens sechsunddreißigstündiger Lagerung bei 38°C die Funktionsfähigkeit erhalten bleiben muß, wenn das Material mit sauren oder alkalischen Flüssigkeiten in Berührung kommt. Das Kunststoffmaterial muß gegenüber dem Einfluß insbesondere von Dieselöl resistent bleiben und schließlich pilz- und mikrobenbeständig sein.

Die bisher bekannten Füllmassen auf der Basis verschiedener Kunststoffmaterialien aber auch auf Polyurethanbasis erfüllen entweder die oben aufgezählten Forderungen nicht befriedigend, beispielsweise die leichte Entfernbarkeit (Punkt 7.)), oder haben unzureichende dielektrische und elektrische Eigenschaften, vor allem bei Feuchteeinwirkung.

Für die umfangreichen Untersuchungen, die zu diesem Ergebnis geführt haben, waren Überlegungen erfinderischer Art unter anderem deshalb erforderlich, weil gegenwärtig das Angebot von Kunststoffmaterialien auf dem Markt äußerst groß ist und für diese zahlreichen Kunststoffe Eigenschaften angegeben werden, die den Fachmann aufgrund einfacher Überlegungen nicht in die Lage versetzen, ein Kunststoffmaterial herauszufinden, das die oben aufgeführten Forderungen insgesamt erfüllt. Es kommt hinzu, daß die einzelnen auf dem Markt befindlichen Materialien bei ihrer Verwendung für den angegebenen Zweck trotz der herausgestellten Eigenschaften letztlich doch versagen. Im Hinblick auf die Aufgabenstellung, die der vorliegenden Erfindung zugrunde liegt, war der Fachmann gezwungen, neue Wege für die Zusammenstellung der Komponenten zu gehen.

Das Verbindungsstück für Kabel, die für die Übertragung von Informationen, insbesondere für die Nachrichtentechnik dienen und aus einer Vielzahl von elektrisch leitenden Adern bestehen, die gebündelt sind und mehrere solcher Bündel in einer Schutzumhüllung enthalten und die an ihren Enden mit anderen Kabeln der gleichen Art verbunden sind, wobei diese Verbindung in einer Kabelmuffe untergebracht ist, die zum Zwecke der Isolation und zum Schutz gegen Feuchte (Wasser) mit Kunststoffmaterial gefüllt ist, die gemäß einer Weiterbildung der Erfindung dadurch gekennzeichnet, daß die Kabelmuffe aus ausgehärtetem, mechanisch stabilen Kunststoffmaterial besteht oder dieses enthält und mit Kunststoffmaterial gemäß der vorliegenden Erfindung gefüllt ist und daß zwischen Kabelmuffe und Kunststoffmaterial eine innige Haftverbindung besteht.

Die Kabelmuffe kann vollständig aus Kunststoffmaterial bestehen, beispielsweise aus Polypropylen oder Niederdruckpolyäthylen. Es ist aber auch möglich, daß die Kabelmuffe aus Metall besteht und an der inneren Oberfläche, das heißt der der Kunststoffüllung zugewandten Oberfläche, mit einem ausgehärteten Kunststoffmaterial überzogen ist. Zwischen diesem ausgehärteten harten Kunststoffmaterial und der Füllung aus Kunststoffmaterial gemäß der vorliegenden Erfindung entsteht eine gute und dichte Verbindung. Kabelmuffen sind bekannterweise zweiteilig, wobei diese beiden Teile im Laufe der Herstellung der Kabelverbindung zusammengesetzt werden. Durch äußere Elemente, wie Klammern, Spannbänder und ähnliches, werden diese beiden Teile zusammengehalten.

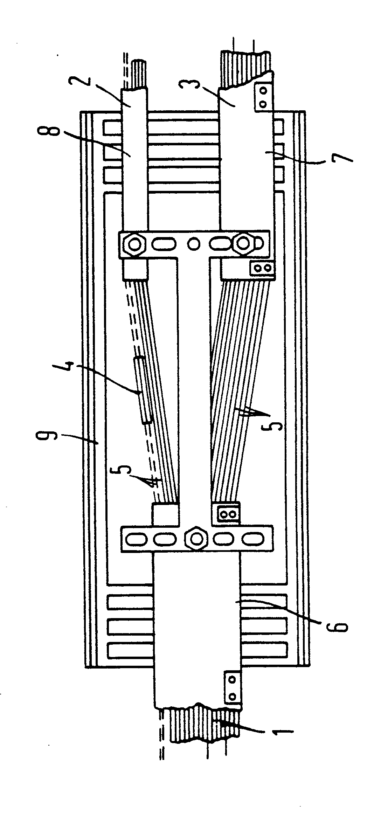

Das Verbindungsstück gemäß der vorliegenden Erfindung ist in der beiliegenden Zeichnung dargestellt.

Das Kabel 1 wird im vorliegenden Fall mit den Kabeln 2 und 3 über Spleißverbinder 4 verbunden. Ein solcher Spleißverbinder ist nur für einen Teil der Adern 5 gezeigt, es versteht sich aber, daß alle Adern durch einen solchen Spleißverbinder verbunden sein müssen.

Die Adern sind als solche oder gebündelt in einer äußeren Schutzumhüllung 6 bzw. 7 bzw. 8 untergebracht. Diese Schutzumhüllung besteht in an sich bekannter Weise aus mechanisch festem Kunststoffmaterial, wie Polyäthylen, Polyvinylchlorid, aber auch aus einem Bleimantel, bei dem eine Isolation mittels Kunststoff vorgesehen ist.

In der Figur ist eine Draufsicht auf eine halbgeöffnete Kabelmuffe gezeigt. Es ist das untere Teilstück 9 zu sehen, das um die Verbindung der beiden Kabel gewissermaßen als Wanne von unten her herumgelegt ist. Dieses Kabelmuffenteil 9 wird, nachdem alle Adern miteinander verbunden sind, mit dem zweiten Kabelmuffenteil (in der Zeichnung nicht dargestellt) verbunden, so daß ein Gehäuse um die Verbindung herum entsteht. Dieses Gehäuse besitzt eine Einfüllöffnung, die dazu benutzt wird, das flüssige Kunststoffmaterial gemäß der vorliegenden Erfindung einzufüllen. Nach dem Aushärten des Kunststoffmaterials sind sämtliche Hohlräume innerhalb der aus den beiden Teilen bestehenden Kabelmuffe, das heißt auch die Hohlräume der Spleißverbinder 4, mit Kunststoff ausgefüllt, so daß die äußeren Schutzumhüllungen 6, 7 und 8 völlig verschlossen sind und in das Kabel Feuchtigkeit ebenso wenig eindringen kann wie in den von Schutzumhüllung freien Teil der Verbindungsstelle der Kabel. Auch bei Beschädigung der Kabelmuffe kann Feuchtigkeit oder Wasser durch das Kunststoffmaterial nicht hindurchdringen.

Bei Verwendung der vorstehend beschriebenen Füllmassen für ein, insbesondere längswasserdichtes Kabel wird diese Füllmasse im Inneren einer äußeren Schutzhülle angeordnet.

## Patentansprüche

1. Füllmasse auf Polyurethan-Basis zur Längsabdichtung von elektrischen oder optischen Kabeln, bestehend aus einem Polyester-Polyäther-Polyol oder einem Polyester-Polyol und einem Diisocyanat im Gemisch mit Dibutylzinndilaurat als Katalysator und mit einem niederviskosen, verzweigten, langkettigen, aliphatischen monofunktionellen Alkohol als Weichmacher, dadurch gekennzeichnet, daß als Diisocyanat Hexamethylen-1.6-Diisocyanat verwendet ist.

2. Verbindungsstück für Kabel, die für die Übertragung von Informationen, insbesondere für die Nachrichtentechnik dienen und aus einer Vielzahl von elektrisch leitenden Adern bestehen, die gebündelt sind und mehrere solcher Bündel in einer äußeren Schutzumhüllung enthalten und die an ihren Enden mit anderen Kabeln der gleichen Art verbunden sind, wobei diese Verbindung in einer Kabelmuffe untergebracht ist, die aus ausgehärtetem, mechanisch stabilem Kunststoffmaterial besteht oder dieses enthält und die zum Zwecke der Isolation und zum Schutze gegen Feuchte (Wasser) mit Kunststoffmaterial gefüllt ist, dadurch gekennzeichnet, daß die Kabelmuffe mit einer Füllmasse nach Anspruch 1 gefüllt ist.

3. Kabel, insbesondere für die Übertragung von Informationen, mit einer äußeren Schutzhülle, in deren Innerem eine Füllmasse vorgesehen ist, dadurch gekennzeichnet, daß eine Füllmasse nach Anspruch 1 verwendet wird.

## Claims

1. A filling material having a polyurethane basis which serves for the longitudinal sealing of electrical or optical cables, and which consists of a polyester-polyether polyol or a polyester polyol and a diisocyanate in admixture with dibutyl zinc dilaurate as a catalyst and a low-viscosity, branched, long-chain, aliphatic mono-functional alcohol as a plasticiser, characterised in that hexamethylene-1,6-diisocyanate is used as the diisocyanate.

2. A connecting fitting for cables which are used for the transmission of information, in particular in communications technology, and which consist of a plurality of electrically conductive wires which are bunched, and a plurality of such bunches are contained in an outer protective sheath and which are connected to other cables of the same type at their ends, the connection being accommodated in a cable sleeve which consists of a hardened, mechanically stable synthetic resin material or includes the latter and which is filled with synthetic resin material for insulation purposes and for protection against moisture (water), characterised in that the cable sleeve is filled with a filling material as claimed in Claim 1.

3. A table, cable, in particular for the transmission of information, having an outer protective sheath, in the interior of which a filling material is provided, characterised in that a filling material as claimed in Claim 1 is used.

## Revendications

1. Masse de remplissage à base de polyuréthane pour l'obturation longitudinale de câbles électriques ou optiques, constituée en un polyester-polyéther-polyol ou un polyester-polyol et en un diisocyanate en mélange avec du dilaurate d'étain dibutyle comme catalyseur et avec un mono-alcool aliphatique, ramifié à longue chaîne de basse viscosité comme plastifiant, caractérisée en ce qu' du 1,6-diisocyanate d'hexaméthylène est utilisé comme diisocyanate.

2. Pièce de connexion pour câbles qui servent à la transmission d'informations, notamment dans la technique des télécommunications, et qui sont constitués d'un grand nombre de conducteurs électriques qui sont rassemblés en un faisceau, plusieurs de ces faisceaux étant contenus dans une gaine extérieure de protection et étant reliés par leurs extrémités avec d'autres câbles du même type, cette connexion étant placée dans un manchon de câble qui est constitué en une matière plastique durcie et stable mécaniquement ou qui contient cette matière plastique et qui est empli de cette matière plastique en vue de l'isolation et pour la protection vis-à-vis de l'humidité (eau), caractérisée

5

en ce que le manchon de câble est empli d'une masse de remplissage suivant la revendication 1.

3. Câble, notamment pour la transmission d'informations, ayant une gaine extérieure de protection à l'intérieur de laquelle est prévue une masse de remplissage, caractérisé en ce qu'une masse de remplissage selon la revendication 1 est utilisée.

0 010 576

7